# EUROPEAN PATENT SPECIFICATION

(11) **EP 1 843 273 B1**
(45) Date of publication and mention of the grant of the patent: **25.01.2012**
(21) Application number: 07251512.5
(22) Date of filing: 05.04.2007
(51) Int. Cl.: G06F 21/00, G06F 21/02

(54) **Secure module for providing trusted time values**
Sicherheitsmodul zum Bereitstellen von zuverlässigen Zeitwerten
Module sécurisé pour fournir des valeurs temporelles de confiance

(30) Priority: 06.04.2006 GB 0606962
(43) Date of publication of application: 10.10.2007
(73) Proprietor: Vodafone Group PLC, Newbury Berkshire RG14 2FN (GB)
(72) Inventor: Montaner, Javier, 6211 GD Maastricht (NL); Koraichi, Najib, 6333 CT Schimmert (NL); Moutarazak, Said, 6163 BP Geleen (NL)
(74) Representative: Harries, Simon George

(56) References cited:
- EP-A- 1 022 640
- EP-A- 1 647 915
- EP-A2- 1 376 304
- WO-A-2004/102967
- US-A1- 2005 089 131

## Description

The present invention relates to a secure module for providing a trusted clock. In particular, the invention relates to the provision of such a module for incorporation within a portable networked device.

In the field of mobile telecommunications services, some services may require the use of date/time values in order to execute: an example might be an "embargoed" content delivery service which allows playback of a content item only before/after a given date. If these services are to be provided offline (i.e. there is no access to a network clock), the service provider must rely on a local clock. However, this source of time may not be accurate. Furthermore, unscrupulous users may also attempt to update the local time value stored in a local clock in order to circumvent the timing restrictions required by services.

The time dependent execution of content delivery services may be mediated using digital rights management (DRM) techniques. It is possible to impose time-constraints on the download and playback of content items using DRM primitives.

Protocols such as OCSP (Online Certificate Status Protocol) provide a means to validate the trustfulness of a certificate in real-time/online scenarios. An OCSP response includes a timestamp that states when the response has been generated. In OMA (Open Mobile Alliance) DRM standards, this value is used to synchronize/renew the DRM time of devices that have desynchronized. This approach for secure time requires a real-time connection to the OCSP server.

In UK patent application, publication no. GB2403382, the applicant has described a DRM delivery system which facilitates time-constrained content delivery, relying upon the presence of a clock that is accurate and resistant to unauthorized alteration. One such clock, referred to in the applicant's application as the Primary Reference Clock (PRC) is based on timing signals received from the Global Positioning System (GPS).

It is known to provide a so-called "secure clock" in electronic devices. One particular example of this type of "secure clock" using a smart card incorporated in a mobile communications device is described in International patent application WO2004/075525.

As W02004/075525 shows, a secure module can be adapted to operate as a source of offline trusted time for portable networked devices. Here, a time value, once received by the SIM from a remote time server, is used as a reference to which a time inferred from a SIM-bound time counter is added. The secure module in this case relies upon an external resource (the device clock) to increment the time counter, which is fundamentally less trustworthy than the secure module itself.

Other known documents are EP 1022640 which discloses a trusted timestamping device which ceases to function after certain conditions are met, and WO2004/102967 which discloses a method for determining an expiry date and time for accessing encrypted data in a secure module that uses an internal clock to provide the current time.

In particular, EP 1022640 discloses a trusted time device that can be linked to a computer by a SCSI connection for providing a trusted timestamp to this computer, this timestamp being required to continue running software on the computer. This trusted time device disables itself after it has issued a present mumber of timestamps or after a certain usage time. Furthermore, this trusted time device monitors the drift of its internal clock based on an external time reference while keeping monotonically increasing timestamps.

It is therefore an object of the invention to obviate or at least mitigate the aforementioned problems.

In accordance with one aspect of the present invention, there is provided a method according to independent claim 1 and a system according to independent claim 2.

Conveniently, the method will further comprise resetting the count of the number of occasions the stored time value is used to a default value, thereby unblocking the provision of time constrained services in accordance with the stored time value.

This transaction counter provides flexibility while keeping control in the network provider's hands. In addition, user involvement is removed by using the transaction counter to restrict the usage of the secure time functionality and forcing the request of a new time value from the server to unblock restricted functionality.

The update events may occur at predetermined intervals. If they do, the predetermined intervals may be of variable duration, the duration being varied in accordance with a required service frequency.

Preferably, the update time value is delivered in an encrypted format.

The update event may be the result of a broadcast message from the communications network.

By using broadcast and/or push techniques to distribute the time value to all the SIMs, the method ensures that the device is updated without involving the user. The broadcast based solution is advantageous for broadcast delivery services (e.g. DVB-H) and facilitates universal access to all (secured) devices - not only mobile devices. As this approach does not rely on the information received from other devices, just the server, security is improved.

The communications network may be a wireless or wired communications network.

The method may further comprise, while the communications device remains offline, maintaining a log of the occasions the stored time value is used to determine access to the time constrained service; and, when the communications device goes online, transmitting the log to a log server, thereby allowing the usage of the time constrained service to be consolidated.

The time constrained service may be access to DRM protected content, access to the DRM being constrained by time-based conditions, so that the method facilitates offline validation of access rights.

In particular, the method allows full control of DRM time-based constraints not relying on the conventional (unsecure) clock of a device. The time value obtained through the invention can also be used for the offline validation of certificates. Other offline services can be provided and monitored using the inventive method.

Furthermore, time management on the SIM is "intelligent" and does not rely on any untrusted external device or clock.

For a better understanding of the present invention, reference will now be made, by way of example only, to the accompanying drawings in which:-
Fig 1 shows the components of a secure time system including a secure module; and
Fig 2 illustrates the functionality of the secure module in accordance with the present invention.

In the mobile telecommunications environment, the subscriber identity module (SIM) is a convenient instance of such a secure module. In following discussion, the invention is illustrated in terms of this mobile telecommunications environment and thus the secure module is referred to as SIM throughout: the invention is not intended to be limited to the use of a SIM, as the skilled person will readily appreciate.

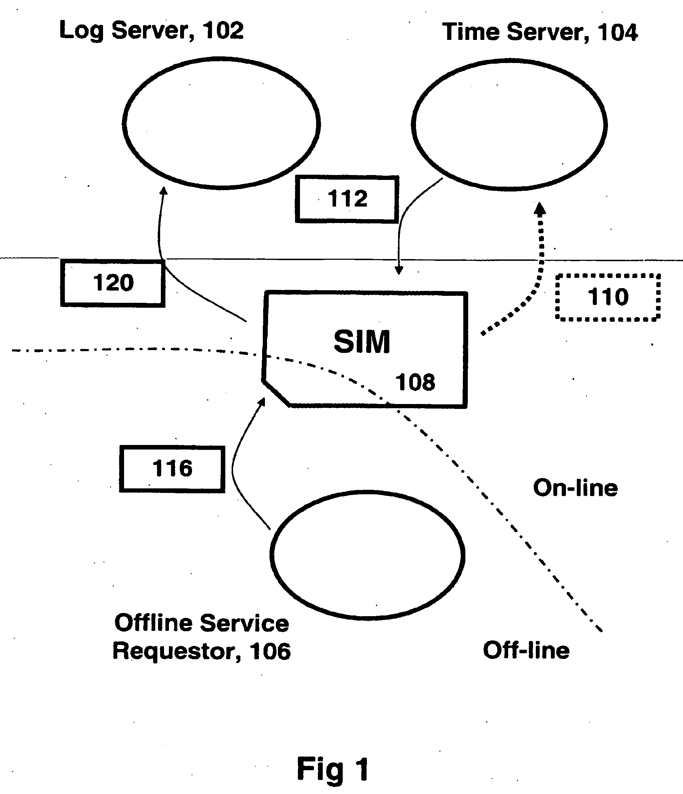

The secure time system 100 in Fig 1 includes a log server 102, a time server 104, an offline service requestor 106 and a SIM 108.

While the SIM is online (connected to a mobile telecommunications network), a connection may be established to the time server 104, whereby a current secure time value 112 may be provided to the SIM 108. The delivery of the current secure time value 112 could optionally be triggered by the receipt of a request 110 from the SIM 108.

The SIM 108 is operable to store a local copy of a secure time value and to check whether the current secure time value provided by the time server 104 is more recent than the local copy of a secure time value, only updating the local time value when the current time value is more recent. In GSM and UMTS/3G networks, the SIM 108 generally connects to the network at short, regular intervals (of the order of minutes). Consequently the local copy of a secure time value is updated frequently.

The SIM 108 is arranged to monitor time value request events. In this way, the SIM 108 may infer how much time has elapsed since the last updated time value was received from the time server 104 and/or detect potential abuses. Monitoring request events facilitates intelligent time management on the SIM 108, thereby minimising reliance on untrusted external devices or clocks. The SIM thus operates as a transaction counter thereby restricting the (mis)use of the locally stored time value and, if necessary, forcing the request of a new time value 112 from the time server 104.

Often, a device or a service running on a device will require a time value while the SIM 108 is temporarily off-line. In Fig 1, the device/service is generally indicated as the offline service requestor 106. The requestor 106 sends a request message 116, asking for a secure time value. In response, the local time value is provided to the requestor 106.

Conveniently, the SIM 108 is arranged to maintain a log 120 of such time request messages 106, such that when the SIM 108 next reconnects to the network the log 120 may be uploaded to the log server 102.

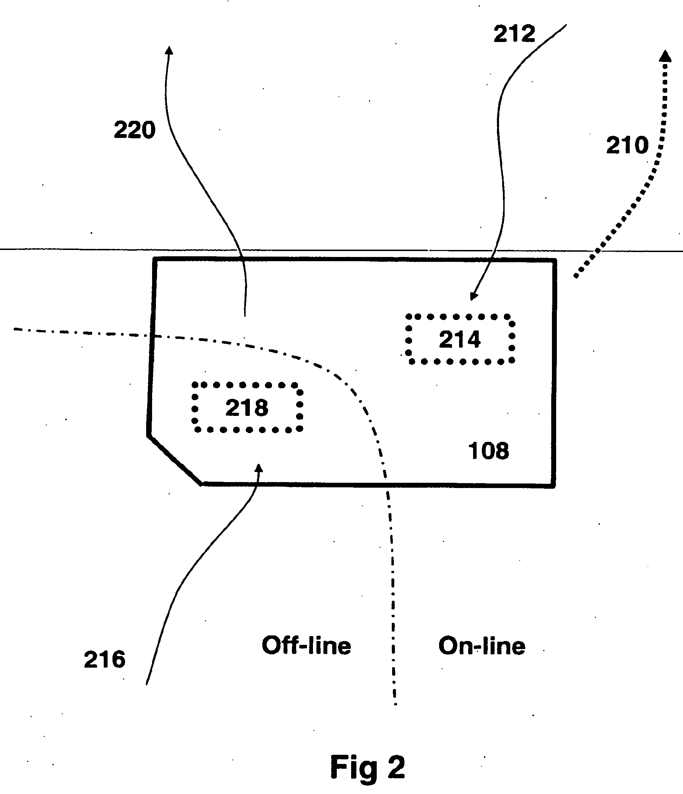

In a preferred embodiment of the invention (see Fig 2), the SIM stores a time value 214 locally and periodically receives an updated time value 212 while connected to the network. When the updated time value 212 is more recent than the locally stored time value 214, the updated time value 212 is stored securely (on the SIM 108) for later use. Depending upon the circumstances, this value is pushed to a recipient over peer-to-peer communications (e.g. as a short message service, SMS, message - "a text") or over broadcast/multicast (e.g. Cell Broadcast, MBMS, DVB).

The time value can be received over fixed networks and/or wireless networks, provided the SIM is ultimately linked to the network source of updated time values (the time server 104). The SIM may be connected, solely through wired connections, to the network source through a smartcard reader. Alternatively, the SIM may be incorporated within a Wi-Fi enabled PDA and connected to the network source, using a combination of wireless link to a wireless ADSL hub and wired ADSL link from that hub.

Conveniently, the updated time value 212 will be cryptographically protected during the transmission. Naturally, the locally stored time value can be updated as often as required by the time granularity of the services: depending upon requirements the update frequency may be of the order of minutes, hours, days or weeks!

When a service that is being provided in offline mode requires the checking of the time value, the most recently updated time value stored in the SIM is used.

As may be seen in Fig 1, the method of the invention ensures that, in offline mode at least, the last valid network time is used. The SIM is arranged to reject any network time value 212 (even if it is signed/protected/encrypted) if its value is older than the time value 214 stored locally in the SIM.

The method of the invention furthermore ensures that the time value will always be positively incremented: that is to say, devices will never be able to reset the time to register an older value.

It might occur to the unscrupulous user to attempt to circumvent this protection by keeping the SIM 108 in a persistent offline mode, in order to benefit from an old time value. The invention addresses such activities by arranging that the SIM keeps a transaction counter 218 that monitors the number of occasions that a given locally stored time value 214 has been used offline. If the counter 218 reaches a certain threshold number, the SIM may block the timing functionality until it receives a suitable update time value 212 from the network. The SIM 108 is conveniently arranged to trigger a request 210 to the network clock the next time it connects to the network, which allows a legitimate unblocking of the SIM 108 when the SIM timing functionality has been blocked for exceeding the threshold. In this way, the invention ensures that the time value 214 stored on the SIM 108 is up-to-date. This request from the SIM 108 to the time server 104 might be signed by the SIM 108 and carry a unique identifier that will be included in the server response. This way the SIM 108 knows that a time value 212 received from the time server 104 corresponds to a (the latest) trigger 210 that the SIM has launched. When online, the SIM 108 can also send to the time server 104, or to another preconfigured server 102, a log 220 with all the requests for trusted time value 214 that it received while it was offline. The server 104,102 can then take action based on the transactions that were executed offline.

Other embodiments of the invention use other mechanisms provided in conventional SIMs and other secure modules. Alternative clock arrangements may be adopted: for example, an external I/O clock or an internal clock. These more sophisticated clock mechanisms can even be used together with the stored network time to obtain a more precise offline time. In any case, the updated time value will never be smaller than the last network value stored on the SIM.

There is a possibility that the security of the time server 104 may become compromised. The SIM 108 may be unable to detect such a compromise, when time values are downloaded to the SIM through a pull mechanism. Therefore, in a further aspect of the invention, this potential drawback is addressed by adding a further layer of security.

In this aspect of the invention, the SIM implements a further counter (a "pull counter") to control the number of time updates have been received as pulled time values. If this counter reaches a certain threshold, the SIM will initiate a push mechanism with additional security (e.g. certificate validation, OCSP, etc) to retrieve the time value from the server.

It may be convenient to provide additional functionality when the time server 104 is not available.

As noted in the above discussion of the prior art, the SIM can be arranged to rely on a local clock (such as the one provided by the handset). This value is not fully trusted but can still be used in certain scenarios to supplement the method of the invention.

Thus, for instance, in one embodiment of the invention, the SIM 108 receives the secure network time from the network (TN0) and stores it. The SIM 108, at substantially the same time, retrieves the current time value from a local source (TLO) (e.g. handset).

When the SIM needs an updated current time (CT) value, it tries to obtain that value from the NW.

However, when the time server 104 (or the network) is not available, no time value (TN1) will be available. Consequently, the SIM 108 computes CT locally by retrieving the current time value from the local source TL1.

The SIM then checks that TL1 is greater than TL0 and computes CT = TN0+ (TL1 -TLO). If TL1<TL0, then CT = TN0. CT is not fully trusted, but for certain use cases it can still be useful if the user has no interest in hacking the time value.

## Claims

1. A method for providing trusted time values in communications devices having secure storage means (108), the communications devices being operable to connect to a communications network (102,104), the method comprising:
storing a time value (214) in the secure storage means (108), the time value being required to determine access to a time constrained service;
while the communications device is offline with respect to the communications network (102,104), counting the number of occasions the stored time value (214) is used to determine access to the time constrained service;
only providing time constrained services in accordance with the stored time value (214), if the number of occasions the stored time value is used does not exceed a predefined usage threshold (218);
while the mobile communications device is online with respect to the communications network (102,104), receiving an update time value (212) in an update event, wherein the update event is the result of a pull message (210) from the communications device;
upon receipt of the update time value (212), comparing the update time value (212) with the time value stored (214) in the secure storage means (108);
only if the update time value (212) is more recent than the stored time value (214), storing the update time value in place of the stored time value;
counting the number of occasions the stored time value (214) is updated with a pulled time value;
if the number of occasions the stored time value (214) is updated with a pulled time value exceeds a predefined pull threshold (218), initiating a push mechanism (210) instead of the pull message to receive the update time value; and
requiring an additional security check of any push message (210) before permitting the communications device to store the update time value (212) in place of the stored time value (214).

2. A method as claimed in claim 1, further comprising:
resetting the count (218) of the number of occasions the stored time value is used to a default value in response to the storage of the update time value (212), thereby unblocking the provision of time constrained services in accordance with the stored time value (214).

3. A method as claimed in claim 1, wherein update events occur at predetermined intervals.

4. A method as claimed in claim 3, wherein the predetermined intervals are of variable duration, the duration being varied in accordance with a required service frequency.

5. A method as claimed in any one of claims 1 to 4, wherein the update time value is delivered in an encrypted format.

6. A method as claimed in any one of claims 1 to 5, wherein the update event is the result of a broadcast message from the communications network.

7. A method as claimed in any one of the preceding claims, wherein the communications network is a wireless communications network.

8. A method as claimed in any one of the preceding claims, further comprising:
while the communications device remains offline, maintaining a log (220) of the occasions the stored time value (214) is used to determine access to the time constrained service; and
when the communications device goes online, transmitting the log (220) to a log server (102), thereby allowing the usage of the time constrained service to be consolidated.

9. A method as claimed in any one of the preceding claims, wherein the time constrained service has access to DRM protected content, access to the DRM being constrained by time-based conditions, so that the method facilitates offline validation of access rights.

10. A method as claimed in any one of the preceding claims, further comprising:
retrieving a first local time value TL0 from a local source;
when an updated time value is required and no time value is available from the communications network, computing an updated time value locally by retrieving a second local current time value TL1 from the local source; and
checking that TL1 is greater than TL0 and updating the stored time value (214) by incrementing the stored time value by the difference between the first and second local time values.

11. A secure module (108) for providing trusted time values to a communications device, the communications device being operable to connect to a communications network (102,104) and the communications device including service access means for providing access to time constrained services, the secure module including:
secure storage means for storing a time value (214), the time value being required to determine access to a time constrained service; and
counting means (212) for counting the number of occasions the stored time value (214) is used to determine access to the time constrained service while the secure module is offline with respect to the communications network;
wherein the service access means provides access to said time constrained services in accordance with the stored time value, only if the number of occasions the stored time value is used does not exceed a predefined usage threshold;
the secure module (108) further comprising:
interface means for receiving an update time value (212) in an update event while the secure module is online with respect to the communications network (102,104), wherein the update event is the result of a pull message (210) from the communications device and wherein the interface means is operable to trigger the update event (210) while the secure module is online, thereby forcing the receipt of the update time value (212);
comparison means for comparing the update time value (212) with the time value stored (214) in the secure storage means upon receipt of the update time value,
pull counting means for counting the number of occasions the stored time value (214) is updated with a pulled time value,
initiating means for initiating a push mechanism (210) instead of a pull mechanism if the number of occasions the stored time value (214) is updated with a pulled time value exceeds a predefined pull threshold (218);
security checking means for carrying out an additional security check of any push message (210) before permitting the communications device to store the update time value (212) in place of the stored time value (214); and
secure write means for storing the update time value (212) in place of the stored time value (214) only if the update time value is more recent than the stored time value.

12. A secure module (108) as claimed in claim 11, further comprising:
resetting means for resetting the counting means (218) to a default value in response to the storage of the update time value (212), thereby unblocking the provision of time constrained services in accordance with the stored time value.

13. A secure module (108) as claimed in claim 11, wherein update events (210) occur at predetermined intervals.

14. A secure module as claimed in claim 13, wherein the predetermined intervals are of variable duration, the duration being varied in accordance with a required service frequency.

15. A secure module as claimed in any one of claims 11 to 14, wherein the update time value (212) is delivered in an encrypted format.

16. A secure module as claimed in any one of claims 11 to 15, wherein the update event is the result of a broadcast message from the communications network.

17. A secure module as claimed in any one of claims 11 to 16, wherein the communications network is a wireless communications network.

18. A secure module as claimed in any one of claims 11 to 17, further comprising:
logging means for maintaining a log (220) of the occasions the stored time value is used to determine access to the time constrained service while the communications device remains offline;
wherein the interface means is further operable to transmit the log (220) to a log server (102) when the communications device goes online, thereby allowing the usage of the time constrained service to be consolidated.

19. A secure module as claimed in any one of claims 11 to 18, wherein the time constrained service has access to DRM protected content, access to the DRM being constrained by time-based conditions, so that the module facilitates offline validation of access rights.

## Patentansprüche

1. Verfahren zum Bereitstellen von zuverlässigen Zeitwerten in Kommunikationsgeräten mit sicheren Speichermitteln (108), wobei die Kommunikationsgeräte mit einem Kommunikationsnetzwerk (102, 104) verbunden werden können, wobei das Verfahren Folgendes beinhaltet:
Speichern eines Zeitwerts (214) in dem sicheren Speichermittel (108), wobei der Zeitwert zum Ermitteln von Zugang zu einem zeitlich beschränkten Dienst benötigt wird;
Zählen, während das Kommunikationsgerät mit Bezug auf das Kommunikationsnetzwerk (102, 104) offline ist, wie häufig der gespeicherte Zeitwert (214) zum Ermitteln von Zugang zu dem zeitlich beschränkten Dienst verwendet wird;
Bereitstellen von zeitlich beschränkten Diensten gemäß dem gespeicherten Zeitwert (214) nur dann, wenn die Anzahl der Benutzungen des gespeicherten Zeitwerts einen vordefinierten Gebrauchsschwellenwert (218) nicht übersteigt;
Empfangen, während das mobile Kommunikationsgerät mit Bezug auf das Kommunikationsnetzwerk (102, 104) online ist, eines Update-Zeitwertes (212) in einem Update-Event, wobei das Update-Event das Ergebnis einer Pull-Nachricht (210) von dem Kommunikationsgerät ist;
Vergleichen, nach dem Empfang des Update-Zeitwertes (212), des Update-Zeitwertes (212) mit dem in dem sicheren Speichermittel (108) gespeicherten Zeitwert (214);
Speichern des Update-Zeitwertes anstelle des gespeicherten Zeitwertes nur dann, wenn der Update-Zeitwert (212) weniger weit zurückliegt als der gespeicherte Zeitwert (214);
Zählen, wie häufig der gespeicherte Zeitwert (214) mit einem gepullten Zeitwert aktualisiert wird;
Einleiten, wenn die Anzahl der Updates des gespeicherten Zeitwerts (214) mit einem gepullten Zeitwert einen vordefinierten Pull-Schwellenwert (218) überschreitet, eines Push-Mechanismus (210) anstatt der Pull-Nachricht zum Empfangen des Update-Zeitwerts; und
Anfordern einer zusätzlichen Sicherheitsprüfung einer eventuellen Push-Nachricht (210), bevor zugelassen wird, dass das Kommunikationsgerät den Update-Zeitwert (212) anstelle des gespeicherten Zeitwerts (214) speichert.

2. Verfahren nach Anspruch 1, das ferner Folgendes beinhaltet:
Zurücksetzen der Zahl (218) der Anzahl der Benutzungen des gespeicherten Zeitwerts auf einen Vorgabewert als Reaktion auf die Speicherung des Update-Zeitwerts (212), um **dadurch** die Bereitstellung von zeitlich beschränkten Diensten gemäß dem gespeicherten Zeitwert (214) freizugeben.

3. Verfahren nach Anspruch 1, wobei Update-Events in vorbestimmten Intervallen auftreten.

4. Verfahren nach Anspruch 3, wobei die vorbestimmten Intervalle von veränderlicher Dauer sind, wobei die Dauer gemäß einer benötigten Dienstehäufigkeit variiert wird.

5. Verfahren nach einem der Ansprüche 1 bis 4, wobei der Update-Zeitwert in einem verschlüsselten Format geliefert wird.

6. Verfahren nach einem der Ansprüche 1 bis 5, wobei das Update-Event das Ergebnis einer Broadcast-Nachricht von dem Kommunikationsnetzwerk ist.

7. Verfahren nach einem der vorherigen Ansprüche, wobei das Kommunikationsnetzwerk ein drahtloses Kommunikationsnetzwerk ist.

8. Verfahren nach einem der vorherigen Ansprüche, das ferner Folgendes beinhaltet:
Führen, während das Kommunikationsgerät offline bleibt, eines Protokolls (220) der Benutzungen des gespeicherten Zeitwerts (214), um Zugang zu dem zeitlich beschränkten Dienst zu ermitteln; und
Senden des Protokolls (220), wenn das Kommunikationsgerät online geht, zu einem Protokollserver (102), um es **dadurch** zuzulassen, dass der Gebrauch des zeitlich beschränkten Dienstes konsolidiert wird.

9. Verfahren nach einem der vorherigen Ansprüche, wobei der zeitlich beschränkte Dienst Zugang zu DRM-geschütztem Inhalt hat, wobei der Zugang zum DRM durch zeitgestützte Bedingungen beschränkt wird, so dass das Verfahren eine Offline-Validierung von Zugangsrechten erleichtert.

10. Verfahren nach einem der vorherigen Ansprüche, das ferner Folgendes beinhaltet:
Abrufen eines ersten lokalen Zeitwerts TL0 von einer lokalen Quelle;
Berechnen, wenn ein aktualisierter Zeitwert benötigt wird und kein Zeitwert vom Kommunikationsnetzwerk erhältlich ist, eines aktualisierten Zeitwertes lokal durch Abrufen eines zweiten lokalen aktuellen Zeitwertes TL1 von der lokalen Quelle; und
Prüfen, ob TL1 größer ist als TL0, und Aktualisieren des gespeicherten Zeitwertes (214) durch Inkrementieren des gespeicherten Zeitwertes um die Differenz zwischen dem ersten und dem zweiten lokalen Zeitwert.

11. Sicheres Modul (108) zum Bereitstellen von zuverlässigen Zeitwerten für ein Kommunikationsgerät, wobei das Kommunikationsgerät mit einem Kommunikationsnetzwerk (102, 104) verbunden werden kann und das Kommunikationsgerät Dienstezugangsmittel zum Bereitstellen von Zugang zu zeitlich beschränkten Diensten beinhaltet, wobei das sichere Modul Folgendes beinhaltet:
sichere Speichermittel zum Speichern eines Zeitwertes (214), wobei der Zeitwert benötigt wird, um Zugang zu einem zeitlich beschränkten Dienst zu ermitteln; und
Zählmittel (212) zum Zählen, wie häufig der gespeicherte Zeitwert (214) benutzt wird, um Zugang zu dem zeitlich beschränkten Dienst zu ermitteln, während das sichere Modul mit Bezug auf das Kommunikationsnetzwerk offline ist;
wobei das Dienstezugangsmittel Zugang zu den genannten zeitlich beschränkten Diensten gemäß dem gespeicherten Zeitwert nur dann gewährt, wenn die Anzahl der Benutzungen des gespeicherten Zeitwerts einen vordefinierten Gebrauchsschwellenwert nicht übersteigt;
wobei das sichere Modul (108) ferner Folgendes umfasst:
Schnittstellenmittel zum Empfangen eines Update-Zeitwertes (212) in einem Update-Event, während das sichere Modul mit Bezug auf das Kommunikationsnetzwerk (102, 104) online ist, wobei das Update-Event das Ergebnis einer Pull-Nachricht (210) von dem Kommunikationsgerät ist und wobei das Schnittstellenmittel die Aufgabe hat, das Update-Event (210) auszulösen, während das sichere Modul online ist, um **dadurch** den Empfang des Update-Zeitwertes (212) zu erzwingen;
Vergleichsmittel zum Vergleichen des Update-Zeitwerts (212) mit dem in dem sicheren Speichermittel gespeicherten Zeitwert (214) nach dem Empfang des Update-Zeitwerts,
Pull-Zählmittel zum Zählen der Aktualisierungen des gespeicherten Zeitwerts (214) mit einem gepullten Zeitwert,
Einleitungsmittel zum Einleiten eines Push-Mechanismus (210) anstatt eines Pull-Mechanismus, wenn die Zahl der Aktualisierungen des gespeicherten Zeitwerts (214) mit einem gepullten Zeitwert einen vordefinierten Pull-Schwellenwert (218) übersteigt;
Sicherheitsprüfmittel zum Durchführen einer zusätzlichen Sicherheitsprüfung einer eventuellen Push-Nachricht (210), bevor zugelassen wird, dass das Kommunikationsgerät den Update-Zeitwert (212) anstelle des gespeicherten Zeitwerts (214) speichert; und
sichere Schreibmittel zum Speichern des Update-Zeitwertes (212) anstelle des gespeicherten Zeitwertes (214) nur dann, wenn der Update-Zeitwert weniger weit zurückliegt als der gespeicherte Zeitwert.

12. Sicheres Modul (108) nach Anspruch 11, das ferner Folgendes umfasst:
Rückstellmittel zum Zurückstellen des Zählmittels (218) auf einen Vorgabewert als Reaktion auf die Speicherung des Update-Zeitwertes (212), um **dadurch** die Bereitstellung von zeitlich beschränkten Diensten gemäß dem gespeicherten Zeitwert freizugeben.

13. Sicheres Modul (108) nach Anspruch 11, wobei Update-Events (210) in vorbestimmten Intervallen auftreten.

14. Sicheres Modul nach Anspruch 13, wobei die vorbestimmten Intervalle von veränderlicher Dauer sind, wobei die Dauer gemäß einer benötigten Dienstehäufigkeit variiert wird.

15. Sicheres Modul nach einem der Ansprüche 11 bis 14, wobei der Update-Zeitwert (212) in einem verschlüsselten Format geliefert wird.

16. Sicheres Modul nach einem der Ansprüche 11 bis 15, wobei das Update-Event das Ergebnis einer Broadcast-Nachricht von dem Kommunikationsnetzwerk ist.

17. Sicheres Modul nach einem der Ansprüche 11 bis 16, wobei das Kommunikationsnetzwerk ein drahtloses Kommunikationsnetzwerk ist.

18. Sicheres Modul nach einem der Ansprüche 11 bis 17, das ferner Folgendes umfasst:
Protokollierungsmittel zum Führen eines Protokolls (220) der Benutzungen des gespeicherten Zeitwerts, um Zugang zu dem zeitlich beschränkten Dienst zu ermitteln, während das Kommunikationsgerät offline bleibt;
wobei das Schnittstellenmittel ferner die Aufgabe hat, das Protokoll (220) zu einem Protokollserver (102) zu senden, wenn das Kommunikationsgerät online geht, um es **dadurch** zuzulassen, dass der Gebrauch des zeitlich beschränkten Dienstes konsolidiert wird.

19. Sicheres Modul nach einem der Ansprüche 11 bis 18, wobei der zeitlich beschränkte Dienst Zugang zu DRM-geschütztem Inhalt hat, wobei der Zugang zu dem DRM durch zeitgestützte Bedingungen beschränkt wird, so dass das Modul eine Offline-Validierung von Zugangsrechten erleichtert.

## Revendications

1. Procédé destiné à fournir des valeurs temporelles de confiance dans des dispositifs de communications pourvus de moyens de stockage sécurisés (108), les dispositifs de communications étant aptes à fonctionner de façon à assurer la connexion vers un réseau de communications (102, 104), le procédé comprenant les opérations consistant à :
stocker une valeur temporelle (214) dans les moyens de stockage sécurisés (108), la valeur temporelle étant requise pour déterminer l'accès à un service à contraintes de temps ;
pendant que le dispositif de communications est hors ligne par rapport au réseau de communications (102,104), compter le nombre d'occasions que la valeur temporelle stockée (214) est utilisée pour déterminer l'accès au service à contraintes de temps ;
procurer uniquement des services à contraintes de temps, en conformité avec la valeur temporelle stockée (214), si le nombre d'occasions que la valeur temporelle stockée est utilisée ne dépasse pas un seuil d'usage prédéfini (218) ;
pendant que le dispositif de communications mobile est en ligne par rapport au réseau de communications (102,104), recevoir une valeur temporelle d'actualisation (212) contenue dans un événement d'actualisation, cas dans lequel l'événement d'actualisation est le résultat d'un message en mode « pull » (210) provenant du dispositif de communications ;
lors de la réception de la valeur temporelle d'actualisation (212), comparer la valeur temporelle d'actualisation (212) avec la valeur temporelle stockée (214) dans les moyens de stockage sécurisés (108) ;
stocker la valeur temporelle d'actualisation, à la place de la valeur temporelle stockée, uniquement si la valeur temporelle d'actualisation (212) est plus récente que la valeur temporelle stockée (214) ;
compter le nombre d'occasions que la valeur temporelle stockée (214) est actualisée à l'aide d'une valeur temporelle en mode « pull » ;
si le nombre d'occasions que la valeur temporelle stockée (214) est actualisée à l'aide d'une valeur temporelle en mode « pull » dépasse un seuil en mode « pull » prédéfini (218), amorcer un mécanisme en mode « push » (210) au lieu du message en mode « pull » afin de recevoir la valeur temporelle d'actualisation ; et
demander un contrôle de sécurité additionnel pour n'importe quel message en mode « push » (210) avant d'autoriser le dispositif de communications à stocker la valeur temporelle d'actualisation (212) à la place de la valeur temporelle stockée (214).

2. Procédé selon la revendication 1, comprenant en outre l'opération consistant à :
réinitialiser le comptage (218) du nombre d'occasions que la valeur temporelle stockée est utilisée pour être remise à une valeur par défaut en réaction au stockage de la valeur temporelle d'actualisation (212), ce qui déverrouille par conséquent la mise à disposition de services à contraintes de temps en conformité avec la valeur temporelle stockée (214).

3. Procédé selon la revendication 1, les événements d'actualisation se produisant à des intervalles prédéterminés.

4. Procédé selon la revendication 3, les intervalles prédéterminés ayant une durée variable, la durée étant variée en conformité avec une fréquence du service requis.

5. Procédé selon l'une quelconque des revendications 1 à 4, la valeur temporelle d'actualisation étant livrée sous un format chiffré.

6. Procédé selon l'une quelconque des revendications 1 à 5, l'événement d'actualisation étant le résultat d'un message de diffusion provenant du réseau de communications.

7. Procédé selon l'une quelconque des revendications précédentes, le réseau de communications étant un réseau de communications sans fil.

8. Procédé selon l'une quelconque des revendications précédentes, comprenant en outre les opérations consistant à :
pendant que le dispositif de communications reste hors ligne, conserver un fichier-journal (220) des occasions que la valeur temporelle stockée (214) est utilisée pour déterminer l'accès au service à contraintes de temps ; et
lorsque le dispositif de communications se met en ligne, transmettre le fichier-journal (220) à un serveur de fichier-journal (102), ce qui autorise par conséquent la consolidation de l'usage du service à contraintes de temps.

9. Procédé selon l'une quelconque des revendications précédentes, le service à contraintes de temps ayant accès à un contenu protégé par la gestion des droits numériques (GDN ou DRM), l'accès à la GDN étant limité par des conditions à base temporelle de sorte que le procédé facilite la validation hors ligne des droits d'accès.

10. Procédé selon l'une quelconque des revendications précédentes, comprenant en outre les opérations consistant à :
récupérer une première valeur temporelle locale TL0 à partir d'une source locale ;
quand une valeur temporelle actualisée est requise et qu'aucune valeur temporelle n'est disponible à partir du réseau de communications, calculer une valeur temporelle actualisée au plan local grâce à la récupération d'une deuxième valeur temporelle actuelle locale TL1 à partir de la source locale ; et
vérifier que TL1 est supérieur à TL0 et actualiser la valeur temporelle stockée (214) en faisant augmenter la valeur temporelle stockée de la différence entre la première et la deuxième valeurs temporelles locales.

11. Module sécurisé (108) destiné à fournir des valeurs temporelles de confiance à un dispositif de communications (108), le dispositif de communications étant apte à fonctionner de façon à assurer la connexion vers un réseau de communications (102, 104), et le dispositif de communications englobant des moyens d'accès aux services pour procurer l'accès à des services à contraintes de temps, le module sécurisé comportant :
des moyens de stockage sécurisés pour stocker une valeur temporelle (214), la valeur temporelle étant requise pour déterminer l'accès à un service à contraintes de temps ; et
des moyens de comptage (212) pour compter le nombre d'occasions que la valeur temporelle stockée (214) est utilisée pour déterminer l'accès au service à contraintes de temps pendant que le module sécurisé est hors ligne par rapport au réseau de communications ;
cas dans lequel les moyens d'accès au service procurent un accès auxdits services à contraintes de temps, en conformité avec la valeur temporelle stockée, uniquement si le nombre d'occasions que la valeur temporelle stockée est utilisée ne dépasse pas un seuil d'usage prédéfini ;
le module sécurisé (108) comprenant en outre :
des moyens d'interface pour recevoir une valeur temporelle d'actualisation (212) contenue dans un événement d'actualisation, pendant que le module sécurisé est en ligne par rapport au réseau de communications (102, 104), cas dans lequel l'événement d'actualisation est le résultat d'un message en mode « pull » (210) provenant du dispositif de communications et cas dans lequel les moyens d'interface sont aptes à fonctionner de façon à déclencher l'événement d'actualisation (210) pendant que le module sécurisé est en ligne, ce qui force par conséquent la réception de la valeur temporelle d'actualisation (212) ;
des moyens de comparaison pour comparer la valeur temporelle d'actualisation (212) avec la valeur temporelle stockée (214) dans les moyens de stockage sécurisés lors de la réception de la valeur temporelle d'actualisation ;
des moyens de comptage en mode « pull » pour compter le nombre d'occasions que la valeur temporelle stockée (214) est actualisée à l'aide d'une valeur temporelle en mode «pull» ;
des moyens d'amorçage pour amorcer un mécanisme en mode « push » (210) au lieu d'un mécanisme en mode « pull », si le nombre d'occasions que la valeur temporelle stockée (214) est actualisée à l'aide d'une valeur temporelle en mode « pull » dépasse un seuil en mode « pull » prédéfini (218) ;
des moyens de contrôle de sécurité pour effectuer un contrôle de sécurité additionnel pour n'importe quel message en mode « push » (210) avant d'autoriser le dispositif de communications à stocker la valeur temporelle d'actualisation (212) à la place de la valeur temporelle stockée (214) ; et
des moyens d'écriture sécurisés pour stocker la valeur temporelle d'actualisation (212), à la place de la valeur temporelle stockée (214), uniquement si la valeur temporelle d'actualisation est plus récente que la valeur temporelle stockée.

12. Module sécurisé (108) selon la revendication 11, comprenant en outre :
des moyens de réinitialisation pour réinitialiser les moyens de comptage (218) et les remettre à une valeur par défaut en réaction au stockage de la valeur temporelle d'actualisation (212), ce qui déverrouille par conséquent la mise à disposition de services à contraintes de temps en conformité avec la valeur temporelle stockée.

13. Module sécurisé (108) selon la revendication 11, les événements d'actualisation (210) se produisant à des intervalles prédéterminés.

14. Module sécurisé selon la revendication 13, les intervalles prédéterminés ayant une durée variable, la durée étant variée en fonction d'une fréquence du service requis.

15. Module sécurisé selon l'une quelconque des revendications 11 à 14, la valeur temporelle d'actualisation (212) étant livrée sous un format chiffré.

16. Module sécurisé selon l'une quelconque des revendications 11 à 15, l'événement d'actualisation étant le résultat d'un message de diffusion provenant du réseau de communications.

17. Module sécurisé selon l'une quelconque des revendications 11 à 16, le réseau de communications étant un réseau de communications sans fil.

18. Module sécurisé selon l'une quelconque des revendications 11 à 17, comprenant en outre :
des moyens de consignation pour conserver un fichier-journal (220) des occasions que la valeur temporelle stockée est utilisée pour déterminer l'accès au service à contraintes de temps pendant que le dispositif de communications reste hors ligne ;
cas dans lequel les moyens d'interface sont en outre aptes à fonctionner de façon à transmettre le fichier-journal (220) à un serveur de fichier-journal (102) lorsque le dispositif de communications se met en ligne, ce qui autorise par conséquent la consolidation de l'usage du service à contraintes de temps.

19. Module sécurisé selon l'une quelconque des revendications 11 à 18, le service à contraintes de temps ayant accès à un contenu protégé par la gestion des droits numériques (GDN ou DRM), l'accès à la GDN étant limité par des conditions à base temporelle de sorte que le module facilite la validation hors ligne des droits d'accès.
